# EUROPEAN PATENT APPLICATION

(11) **EP 0 708 000 A2**
(43) Date of publication of application: **24.04.1996**
(21) Application number: 95304660.4
(22) Date of filing: 03.07.1995
(51) Int. Cl.: B60N 2/44

(54) **Seat cushion trim cover**

(30) Priority: 21.10.1994 US 326870
(71) Applicant: HOOVER UNIVERSAL INC., Plymouth, Michigan 48170 (US)
(72) Inventor: Kline, Richard G., Harrison Township, Michigan 48045 (US); Sutton, Amy R.A., Canton Township, Michigan 48187 (US)
(74) Representative: Price, Nigel John King

(57) **Abstract**

A cushion component for a seat assembly having an inner structure and a trim cover surrounding said inner structure in which a plastic banding strap is used to attach the trim cover to the inner structure. The banding strap is contained within a listing pocket around the peripheral edge of an opening formed in the trim cover and is drawn tight, and is friction welded to close the trim cover opening around the inner structure of the cushion component. The plastic banding strap avoids the use of hog ring fasteners and J-shaped fasteners.

## Description

The present invention relates generally to vehicle seat assemblies and in particular to a seat assembly component having an inner structure and a cover member with a banding strap used to close the cover member around the inner structure of the component.

Presently, seat trim covers are attached to the foam cushion and frame of a seat cushion component in a variety of ways. One of the most popular methods is the use of a J-shaped plastic retainer. The trim cover is manufactured as an envelope having an opening. The seat cushion and frame are placed in the trim cover envelope, and the opening is closed around the cushion and frame, reducing the size of the opening or entirely closing the opening so the cushion and frame can no longer pass through the opening. To attach the trim cover to the frame, the J-shaped fasteners are sewn to the trim cover about the periphery of the opening. The trim cover is pulled tight by hand and the J-shaped fasteners are attached to wires, metal flanges or the like in the seat frame, or to a complementary fastener on the opposite side of the trim cover opening. This type of trim cover is costly and time consuming due to the added step of sewing the J-shaped fasteners to the cover. Assembly can also be difficult since the cover is pulled tight by hand and the fasteners are attached by hand.

Another popular method of attaching the trim cover to the seat component frame is the use of wires and hog rings. With this method, a wire is placed along the periphery of the opening in the trim cover. After the cover is pulled tight around the cushion and frame, it is connected to a second wire in the seat frame by the use of metal rings known as hog rings. The hop rings are bent into a generally circular shape around the two wires to hold the two wires together. While hog rings are relatively inexpensive, it can often be difficult for assembly personnel to manipulate the tools used to apply the hog ring fasteners.

Other known methods of attaching the cover include the use of tie straps at the periphery of the trim cover opening. The ends of the straps are tied together beneath the seat cushion and frame. Yet another method utilizes a rope or paper cord which is fed through a pocket about the trim cover opening and the ends are tied together beneath the cushion and frame, drawing the cover tightly around the cushion and frame. With both of these methods, it is difficult to secure the two ends of the straps or paper cords together.

It is an object of the present invention to provide an alternative means for holding the trim cover onto the cushion and frame that is low in cost, easy to assemble and avoids the disadvantages with the previously known attachments.

The present invention utilizes a listing pocket sewn around the periphery of the trim cover opening. The pocket can be one continuous pocket about the entire opening having two closely spaced ends or multiple spaced pockets which can be formed along the periphery of the envelope opening. The cushion and frame are inserted into the trim cover through its opening. A banding strap is then threaded through the pocket. Once the banding strap has been inserted into the pocket, it is pulled to cinch the cover tightly around the cushion and frame. Once the trim cover is pulled sufficiently tight, the two ends of the banding strap are welded to one another. The preferred material for the banding strap is a thermoplastic resin, preferably a polyester such as polyethylene terephthalate.

It is an advantage of the plastic banding strap over other types of draw strings that the tools are readily available for both pulling the strap tight and for securing the ends of the banding strap together. This is due to the widespread use of plastic banding straps in packaging for holding bundles together.

Further objects, features and advantages of the invention will become apparent from a consideration of the following description and the appended claims when taken in connection with the accompanying drawings.
Figure 1 is a perspective view of a seat assembly utilizing a seat cushion with the trim cover attachment of the present invention;
Figure 2 is a plan view of the seat cushion bottom showing the cushion and frame placed within the trim cover prior to attachment of the trim cover to the seat cushion;
Figure 3 is a plan view similar to Figure 2 showing the banding strap in place within the trim cover pocket and joined at its ends to attach the trim cover to the seat cushion; and
Figure 4 is an elevational view of a hand operated power tool used to tension and weld the banding strap.

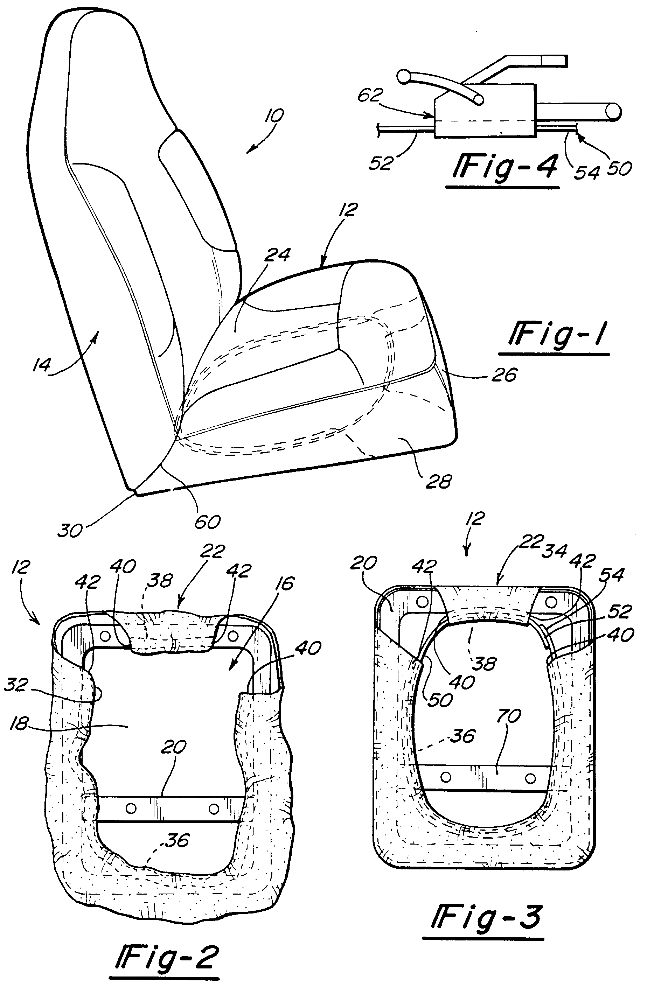

A seat assembly 10 is shown in Figure 1 having a seat cushion 12 according to the present invention. The seat assembly 10 further includes an upright seat back 14 extending upwardly at the rear of the seat cushion.

The seat cushion 12 includes an inner structure 16 comprising a resilient pad 18 and a frame 20 which is at least partially embedded in or attached to the pad 18. The seat cushion 12 includes a trim cover 22 which covers the top surface of the inner structure 16, forming a seating surface 24. The trim cover also is wrapped around the front 26, the sides 28 and the back 30 of the seat cushion 12 and beneath the seat cushion 12.

The trim cover is made of one or more pieces of sheet material joined together to form an envelope having an opening 32. The inner structure 16 is placed within the trim cover envelope through the opening 32, with the trim cover being wrapped over the front sides and the rear of the inner structure, and onto the bottom side of the inner structure. About the periphery of the opening 32, the trim cover is hemmed, forming one or more listing pockets at the periphery of the opening. In Figure 2, the periphery of the opening is formed with two listing pockets 36, 38. Each listing pocket has opposite ends 40, 42. The end 42 of one pocket is adjacent to and spaced from the end 40 of the other pocket. If only one pocket is used, its ends 40, 42 are spaced from one another forming a pair of adjacent pocket ends.

With reference to Figure 3, a banding strap 50 has been passed through the listing pockets 36, 38 and has end portions 52, 54. The strap end portion 52 extends from the end 42 of the pocket 38 while the strap end portion 54 extends from the end 40 of the pocket 36. The banding strap 50 is pulled tight, drawing the trim cover underneath the seat cushion inner structure 16. The two end portions are joined together by friction welding, forming a closed loop. The banding strap 50 is shorter in length than the periphery of the trim cover opening such that the trim cover is cinched tightly beneath the inner structure and maintained firmly in place upon the inner structure.

A variety of thermoplastic resins can be used for the banding strap, such as polypropylene, polyester and nylon. A preferred thermoplastic resin is polyethylene terephthalate due to its ready availability, low cost and recyclability. Hand tools, such as the tool 62 shown in Figure 4, are available which receive both end portions 52, 54 of the banding strap 50. The tool 62 is a pneumatic tool which pulls the strap to the desired tension and friction welds the end portions together. The tool can be set to produce the desired tension in the strap, resulting in uniformity in seat production. It is an advantage of the present invention that the banding strap is both tensioned and welded by a tool. This eliminates the need for production personnel to manually tension the strap as has been required in the past with drawstring type seat cover attachments. Suitable hand tools for tensioning and welding the strap are available from Signode Corporation in Glenview, Illinois, as model numbers VXL-2000 and VXM-2000.

The trim cover, when closed, provides access to portions of the frame 20 for the purpose of mounting the cushion 12 to the seat assembly 10. The use of a plastic banding strap to attach the trim cover is not limited to use on a seat cushion 12, but can also be used for a seat back at its lower end 60. The banding strap can also be used with a seat back for a vehicle rear bench seat.

It is to be understood that the invention is not limited to the exact construction illustrated and described above, but that various changes and modifications may be made without departing from the scope of the invention as defined in the following claims.

## Claims

1. A component for a seat assembly comprising:
an inner structure;
a cover member having one or more pieces of a sheet material joined together to form an envelope, said envelope having a peripheral edge of a predetermined length forming an opening, said predetermined length of said peripheral edge being sufficiently large for said inner structure to pass through said opening and into said envelope, said envelope substantially surrounding said inner structure;
at least one pocket formed lengthwise along said peripheral edge portion, each said at least one pocket having two ends with each of said pocket ends being arranged adjacent another of said pocket ends forming pairs of adjacent pocket ends; and
a plastic resin banding strap extending through said at least one pocket, said banding strap having first and second end portions projecting from a pair of adjacent pocket ends, said end portions being welded together forming a closed loop of a length less than the length of said peripheral edge whereby said cover member is drawn together at said peripheral edge, reducing the size of said opening to hold said cover member on said inner structure.

2. The component for a seat assembly of claim 1 wherein said banding strap is made of polyethylene terephthalate.

3. The component for a seat assembly of claim 1 wherein said end portions of said banding strap are friction welded together.

4. The component for a seat assembly of claim 1 wherein said pocket is formed by a hem in said cover at said peripheral edge.

5. A component for a seat assembly comprising:
an inner structure;
a cover member having one or more pieces of a sheet material joined together to form an envelope, said envelope having a peripheral edge of a predetermined length forming an opening, said predetermined length of said peripheral edge being sufficiently large for said inner structure to pass through said opening and into said envelope, said envelope substantially surrounding said inner structure;
a plurality of pockets formed lengthwise along said peripheral edge portion, each of said pockets having two ends with each of said pocket ends being arranged adjacent one of said ends of another of said pockets thereby forming pairs of adjacent pocket ends; and
a thermoplastic resin banding strap extending through said pockets, said banding strap having first and second end portions projecting from one of said pairs of adjacent pocket ends, said strap being of a length less than the length of said peripheral edge and said end portions being friction welded together forming a closed loop of a length less than the length of said peripheral edge whereby said cover member is drawn together at said peripheral edge, reducing the size of said opening to hold said cover member on said inner structure.

6. The component for a seat assembly of claim 5 wherein said banding strap is made of polyethylene terephthalate.
